# EUROPÄISCHE PATENTANMELDUNG

(11) **EP 1 199 482 A1**
(43) Veröffentlichungstag der Anmeldung: **24.04.2002**
(21) Anmeldenummer: 01123703.9
(22) Anmeldetag: 04.10.2001
(51) Int. Cl.: F16B 13/06, F16B 33/00

(54) **Rahmendübel**

(30) Priorität: 20.10.2000 DE 20017963 U
(71) Anmelder: Adolf Würth GmbH & Co. KG, 74653 Künzelsau (DE)
(72) Erfinder: Kerl, Gregor, 74676 Niedernhall (DE)
(74) Vertreter: Schöndorf, Jürgen

(57) **Zusammenfassung**

Ein Rahmendübel zur Befestigung eines Fensterrahmens, Türrahmens oder dergleichen in einer Laibung, enthält eine aufweitbare Dübelhülse (1) und eine Schraube (8) zum Aufweiten der Dübelhülse (1). Da der Kopf (9) der Schraube von der Innenseite des Rahmens (7) her sichtbar ist, weist die Schraube (8) eine ihre gesamte Oberfläche abdeckende Farbschicht auf.

## Beschreibung

Die Erfindung geht aus von einem Rahmendübel zur Befestigung eines Rahmens, beispielsweise eines Fensterrahmens, eines Türrahmens oder dergleichen, in einer Laibung. Derartige Rahmen werden fabrikmäßig hergestellt und an einer Baustelle dann in der Laibung befestigt. Die Rahmen werden zunächst mit Hilfe von provisorischen Halterungen korrekt positioniert. Anschließend wird durch den Rahmen in das Mauerwerk gebohrt, und dann ein Rahmendübel durch den Rahmen in das Dübelloch eingesteckt. Der Dübel wird dann mit Hilfe einer Schraube festgeschraubt. Der Kopf der Schraube bleibt in dem Rahmen sichtbar. Bei geöffnetem Fenster oder geöffneter Tür ist daher der Kopf der Schraube sichtbar.

Da die Schrauben der Feuchtigkeit ausgesetzt sind, werden im Stand der Technik in der Regel verzinkte Schrauben verwendet. Diese schützen die Schraube vor einem Rosten, führen aber dazu, dass die Schraube eine metallisch aussehende Oberfläche aufweist, auch im Bereich ihres sichtbaren Kopfes. An den übrigen Stellen würde diese Verzinkung nicht stören.

Damit die Schraubenköpfe nicht so stark auffallen, ist es üblich, sie mit Hilfe von Kappen abzudecken, die aus Kunststoff bestehen und der Farbe des Rahmens angepasst sind.

Die Verzinkung von Schrauben stößt zunehmend aus Umweltschutzgründen auf Ablehnung.

Der Erfindung liegt die Aufgabe zu Grunde, einen Rahmendübel zur Befestigung eines Rahmens zu schaffen, der optisch in montiertem Zustand nicht stört und bei dem auch Umweltgesichtspunkte bei der Herstellung berücksichtigt werden können.

Zur Lösung dieser Aufgabe schlägt die Erfindung einen Rahmendübel mit den Merkmalen des Anspruchs 1 vor. Weiterbildungen der Erfindung sind Gegenstand der abhängigen Ansprüche, deren Wortlaut durch Bezugnahme zum Inhalt der Beschreibung gemacht wird.

Die Schraube wird über ihre gesamte Oberfläche mit einer Farbschicht versehen, die die metallische Oberfläche der Schraube abdeckt. Die Schraube wird daher über ihre gesamte Oberfläche gegen ein Rosten geschützt, und gleichzeitig im Bereich ihres Kopfes mit einer Farbe versehen, die das Aufsetzen einer Kappe zur Verhinderung der Sicht auf das Metall erübrigt.

Erfindungsgemäß kann vorgesehenen sein, dass die Farbschicht aus einem das Rosten verhindernden Material besteht. Es kann sich beispielsweise um eine Pulverbeschichtung mit einer Farbe handeln.

In Weiterbildung der Erfindung kann vorgesehen sein, dass die Farbschicht aus einer Oberflächenbeschichtung besteht bzw. von dieser gebildet wird.

Eine weitere Möglichkeit, die gesamte Oberfläche der Schraube mit einer Farbe zu versehen, kann darin bestehen, dass die Farbschicht von einer Oberflächenumwandlung gebildet wird.

Besonders sinnvoll ist es, wenn die Farbe der Farbschicht der Schraube der Farbe des Rahmens entspricht.

Bei der Beschichtung kann es sich insbesondere um eine mehrschichtige Beschichtung handeln, die auch unter der Bezeichnung Duplexbeschichtung, Lamellenbeschichtung oder Pigmentbeschichtung bekannt ist.

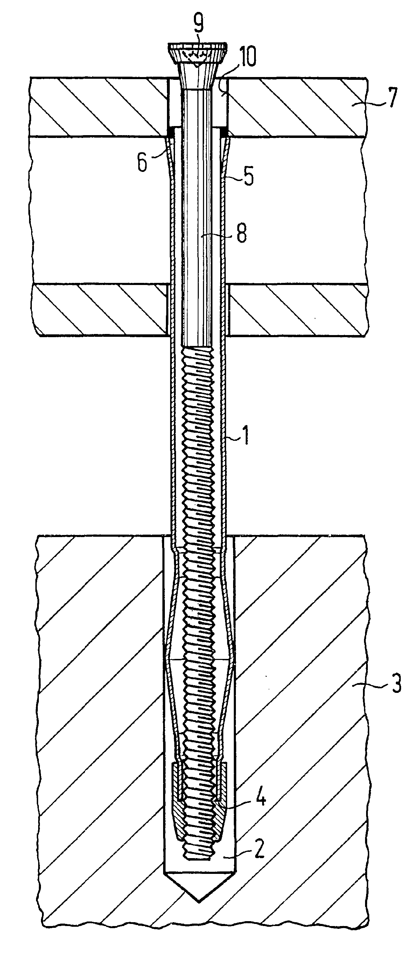

Weitere Merkmale, Einzelheiten und Vorzüge der Erfindung ergeben sich aus der folgenden Beschreibung einer bevorzugten Ausführungsform der Erfindung sowie an Hand der Zeichnung.
Hierbei zeigt die einzige Figur schematisch einen Schnitt durch einen Teil eines mit Hilfe eines Rahmendübels an einer Wand befestigten Fensterrahmens. Der Rahmendübel enthält eine Hülse 1, die im Bereich ihres in das Bohrloch 2 der Wand 3 eingesetzten Endes eine Kappe 4 mit einem Innengewinde aufweist. In ihrem vorderen Bereich ist die Hülse 1 so ausgebildet, dass sie nach außen aufknicken kann, wenn die Kappe 4 in Richtung auf das äußere Ende 5 der Hülse 1 angezogen wird.

Im Bereich ihres äußeren Endes 5 enthält die Dübelhülse 1 zwei nach außen vorspringende federnde Zungen 6, die eine Anlagefläche für den Fensterrahmen 7 bilden können.

In die Hülse 1 ist eine Schraube 8 eingeschraubt, die ein Gewinde aufweist, das dem Innengewinde der Kappe 4 entspricht. Im Bereich ihres äußeren Endes enthält die Schraube 8 einen Schraubenkopf 9 in Form eines Senkkopfs.

Die gesamte Schraube ist mit einer Oberflächenbeschichtung in der gleichen Farbe versehen, wie sie der Fensterrahmen 7 aufweist. Die Oberflächenbeschichtung ist so beschaffen, dass sie eine deckende Farbe über die gesamte Oberfläche bewirkt. Gleichzeitig ist die Schraube 8 damit gegen ein Rosten gesichert.

Der Rahmendübel wird folgendermaßen verwendet. Zunächst wird der Fensterrahmen 7 provisorisch an der richtigen Stelle und in der richtigen Position gehaltert. Anschließend wird durch den Rahmen 7 mit einem Bohrer ein Loch gebohrt, das bis in das Mauerwerk 3 reicht. Nach dem Herausziehen des Bohrers wird der Rahmendübel durch das Loch 10 des Rahmens 7 hindurch gesteckt. Die federnden Zungen 6 federn zurück und federn dann wieder nach außen, wenn sie durch das Loch 10 hindurch gelangt sind. Anschließend wird der Dübel durch Festdrehen der Schraube 8 aufgespreizt und damit der Rahmen 7 an mehreren Stellen mit dem Mauerwerk 3 verspannt. Der Schraubenkopf 9 bleibt sichtbar. Da auch er von der deckenden Farbschicht abgedeckt ist, fällt er optisch nicht auf, ohne dass eine Kappe aufgesetzt werden müsste.

## Patentansprüche

1. Rahmendübel zur Befestigung eines Fensterrahmens (7), Türrahmens oder dergleichen in einer Laibung, mit
1.1 einer aufweitbaren Dübelhülse (1) und
1.2 einer Schraube (8) zum Aufweiten der Dübelhülse (1),
1.2.1 deren Kopf (9) von der Innenseite des Rahmens (7) her sichtbar ist, wobei
1.2.2 die Schraube (8) eine ihre gesamte Oberfläche abdeckende Farbschicht aufweist.

2. Rahmendübel nach Anspruch 1, bei dem die Farbschicht aus einem das Rosten verhindernden Material besteht.

3. Rahmendübel nach Anspruch 1 oder 2, bei dem die Farbschicht von einer Oberflächenbeschichtung gebildet ist.

4. Rahmendübel nach einem der vorhergehenden Ansprüche, bei dem die Farbschicht von einer Oberflächenumwandlung gebildet ist.

5. Rahmendübel nach einem der vorhergehenden Ansprüche, bei dem die Farbe der Farbschicht der Schraube (8) der Farbe des Rahmens (7) entspricht.
